# EUROPEAN PATENT APPLICATION

(11) **EP 3 812 037 A1**
(43) Date of publication of application: **28.04.2021**
(21) Application number: 19205493.0
(22) Date of filing: 25.10.2019
(51) Int. Cl.: B01J 19/00

(54) **A PRINTED PROCESSING UNIT FOR USE IN MIXING BIOLOGICAL OR CHEMICAL MATERIALS, AND A METHOD OF FABRICATING THE SAME**

(71) Applicant: University College Dublin, National University of Ireland, Dublin, Dublin 4 (IE)
(72) Inventor: BRADY, Sarah, Dublin, Dublin 4 (IE); FERGUSON, Steven, Dublin, Dublin 4 (IE); HARDING, Matthew, Dublin, Dublin 4 (IE); DOWLING, Denis, Dublin, Dublin 4 (IE)
(74) Representative: Purdylucey Intellectual Property

(57) **Abstract**

A printed processing unit for use in processing chemical, biochemical, pharmaceutical or biopharmaceutical materials, the unit comprising an inlet port for receiving the materials, a reaction chamber for processing the materials in fluid communication with the inlet port, a channel to transfer the materials from the inlet port to the reaction chamber, and an outlet port in fluid communication with the reaction chamber for removing the processed materials, wherein the reaction chamber is in an X- or Y-axis orientation and the inlet port and the outlet port are in a Z-axis orientation relative to the orientation of the reaction chamber

## Description

### Field of the Invention

The invention relates to the use of additive manufacturing for printing a processing unit that comprises a flow reactor or mixer. The reactor or mixer can be used in the processing of chemical, biochemical, pharmaceutical or biopharmaceutical reagents, intermediates and products.

### Background to the Invention

Flow reactors and process equipment are used to produce products by a chemical reaction between materials (typically liquids or gases). A continuous flow system pumps material through the flow reactor/separators. As the materials move through the reactor, they mix/interact/react to produce a solution or product. Continuous flow reactors typically have numerous inlets and one outlet for the solution/product. Flow reactors are common in many industries as they are used for food production, chemical synthesis, green chemistry, catalytic reactions, polymer chemistry and pharmaceuticals production. Examples of products produced by flow continuous flow chemistry are ethanol, methanol and ammonia.

Continuous flow reactors can differ from batch reactors in that a process or reaction takes place over a spatial position within the reactor often reaching a steady state at any given point in the reactor with respect to time. A batch reactor is typically embodied in a tank with a mechanical mixer, but more generally, is a reactor where the reaction or process progresses with respect to time and does not vary significantly with respect to spatial position in the reactor if sufficient mixing is provided. The products are added to the tank and mixed for the required amount of time. Once mixed, the batch of product is released from the bottom of the tank and the process is repeated. Continuous flow reactors are common in large scale commodity chemical manufacturing and are becoming more widely utilized in terms of high value, lower volume products, for example in pharmaceutical manufacturing. Continuous flow reactors allow product to be produced continually, with better control over the heating or cooling during the process and have improved mixing. They also have a smaller footprint which allows a reduction in the production plant size.

Several types of continuous flow reactors are available, such as tubular reactors, coiled tube reactors and glass chip reactors. These reactors are typically made from stainless steel, glass or polymers (such as Perfluoroalkoxy alkanes (PFA)). Glass reactors have high chemical compatibility but have limited tolerance for high pressure operation, are significantly more expensive, and are difficult to configure to achieve geometrically complex structures to enhance mixing and heat transfer. Also, glass reactors, coil reactors and tubular reactors typically do not have integrated turbulence promoters or static mixers as they are difficult to produce as one part with conventional manufacturing methods. These mixers rely on either laminar mixing or inducement of turbulent mixing eddies to enhance mixing performance, such elements can also enhance heat transfer by increasing convective heat transport and reducing heat transfer resistance on the process side of the equipment.

Additive Manufacturing (3D printing) offers the potential to tailor the reactor designs to meet the needs of the individual agents being processed. For example, the number of mixers can be altered to address the level of mixing required between the agents being processed. Polymer reactors have been attempted using, for example, cyclic olefin copolymer (COC) and polypropylene (PP), however their chemical, thermal and mechanical properties (particularly bust pressure) has been poor. Fused Filament Fabrication (FFF; also called Fused Deposition Modelling (FDM)) is a form of additive manufacturing where a filament of a polymer is heated to above its melting temperature and extruded through a nozzle layer-by-layer to produce a part. Yet even with printing parameter optimised, parts produced by FFF do not have comparable mechanical properties to parts produced by injection moulding. Studies comparing FFF printed and injection moulded polyether ether ketone (PEEK) dog-bone parts to have shown 23-33% reduction in tensile strength. This is due to an inherent weakness in FFF parts between the deposited layers.

There are also design restrictions in parts that can be produced by FDM. Holes/circles printed in the X or Y-axis typically produce an oval shape rather than circular shape. Size is another restriction, with all parts in the X- and Y-axis needing to be larger than the nozzle diameter used. Also, overhangs >45° will need to be supported by a 3D printed scaffold which is removed in post-production. However, these scaffolds cannot be removed easily from internal structures.

It is an object of the subject application to overcome at least one of the above-mentioned problems.

### Summary of the Invention

The surprising result of the method and product of the claimed invention is that the printed PEEK reactor could withstand a pressure of over of 500 psi for 20 minutes without any indication of leaking. The closest value reported in the literature for a polymer reactor of the same type is 290 psi. One of the important features that should be noted with the printed processing unit described herein is the pressure and chemical compatibility it exhibits. The unexpected ability to print the processing unit with compatibility to such high pressures using the described printing method, and that the processing unit can connect and integrate without leaks to conventional tubing or fittings, provides utility in quite a wide range of chemical and biological process applications.

According to the present invention, there is provided, as set out in the appended claims, a printed processing unit for use in processing chemical, biochemical, pharmaceutical or biopharmaceutical materials, the unit comprising an inlet port for receiving the materials, a reaction chamber for processing the materials in fluid communication with the inlet port, a channel to transfer the materials from the inlet port to the reaction chamber, and an outlet port in fluid communication with the reaction chamber for removing the processed materials, wherein the reaction chamber is in an X- or Y-axis orientation and the inlet port and the outlet port are in a Z-axis orientation relative to the orientation of the reaction chamber.

In one aspect, the unit comprises at least two inlet ports that are in fluid communication with the channel.

In one aspect, the reaction chamber further comprises an integrated mixer. Preferably, the reaction chamber comprises between 2 and 20 integrated mixers.

In one aspect, the integrated mixer has a thickness of between about 0.7 mm and about 1.5 mm. In one aspect, the integrated mixer is selected from a helical static mixer, a kenics-type static mixer, and the like.

In one aspect, the channel has an internal diameter of between about 1.5 mm and about 5 mm. In one aspect, the channel has an internal diameter of between about 2 mm and about 4 mm. Preferably, the channel has an internal diameter of about 2 mm.

In one aspect, the channel is configured to have at least one or more S-bends.

In one aspect, the unit is composed of a polymer selected from polyether ether ketone (PEEK), polyether ketone ketone (PEKK), fluorinated ethylene propylene (FEP), perfluoroalkoxy alkane (PFA) and the like. Preferably, the polymer is polyether ether ketone (PEEK).

In one aspect, the polymer is further reinforced with a material selected from graphene, basalt fibre, carbon or glass (using continuous or short fibre), and the like.

In one aspect, the inlet port and outlet port further comprise a threaded portion. Preferably, the threaded portion of the inlet and outlet ports is orthogonal to the layers of the reactor.

In one aspect, the unit can withstand pressures of up to 1000 psi. Preferably, the unit can withstand pressures of greater than 500 psi.

In one aspect, the unit is configured to connect to a plurality of other similarly configured, identically configured or differently configured units.

In one aspect, there is provided a method for printing a processing unit according to any one of the preceding claims, the method comprising:
providing a programmable 3D printer with a printing chamber, a build plate and a printer head configured to deliver a polymer to print the unit;
providing a print nozzle on the printer head that is heated to between about 375 °C and about 400 °C;
setting the printer to print the polymer at a set speed of between about 7mms⁻¹ and about 16mms⁻¹; and
maintaining the printing chamber and the build plate at a temperature of between about 50 °C and about 100°C, and about 140 °C and about 180 °C, respectively.

In one aspect, the nozzle is heated to a temperature of between about 375°C and about 385 °C. Preferably, the nozzle is heated to a temperature of about 378 °C.

In one aspect, the nozzle has a diameter of between about 0.10 mm and about 1.0 mm. Preferably, the nozzle has a dimeter of about 0.15 mm.

In one aspect, the polymer is printed in layers having a height of about 0.05 mm to about 0.15 mm. Preferably, the height is between about 0.08 mm and 0.1 mm.

In one aspect, the printing chamber is maintained at a pressure of between atmospheric pressure (101 kPa) and 1 Pa. Preferably, the pressure is maintained at about 1 Pa.

In one aspect, there is provided a use of a processing unit as described above for providing a reaction vessel for processing pharmaceutical, biopharmaceutical, biological or biochemical ingredients.

### Definitions

In the specification, the term "processing unit" and "unit" should be understood to mean a continuous processing unit that can be used in the chemical or biological areas for mixing chemical, biochemical, pharmaceutical or biopharmaceutical ingredients under pressure. The unit can perform, for example, chemical and bioprocessing applications. The terms can be used interchangeably.

In the specification, the term "chemical material" should be understood to mean any species, reagent, intermediate species, solvent, catalyst, enzyme *etc.* used to take part in influencing or facilitating a transformation via a chemical reaction or a separation of a mixture of species from a solution containing two or more chemical species that aids in the transformation of one chemical species to another. Normally to a higher value or required product or intermediate.

In the specification, the term "biochemical material" should be understood to mean any species, reagents, intermediate species, solvent, catalyst, enzyme or biological entity (*e.g.* cells) *etc.* used to take part in influencing or facilitating a transformation via a chemical reaction or a cellular process or separation of resulting mixtures of species from a solution containing two or more biochemical species that aids in the transformation of one species to another. Often this will involve species produced in biological systems such as proteins, RNA, DNA, a virus or a synthetically manipulated analog of these species not found in living systems.

In the specification, the term "pharmaceutical material" should be understood to mean any species, reagents, intermediate species, solvent, catalyst, enzyme *etc.* used to take part in influencing or facilitating a transformation via a chemical reaction or a separation of mixture of species from a solution containing two or more chemical species that aids in the transformation of one chemical species to another in the manufacturing or processing of a drug.

In the specification, the term "biopharmaceutical material" should be understood to mean, any species, reagents, intermediate species, solvent, catalyst, enzyme or biological entity (*e.g.* cells) *etc.* used to take part in influencing or facilitating a transformation via a chemical reaction or a cellular process or a separation of resulting mixtures of species from a solution containing two or more species that aids in the transformation of one species to another. Often this will involve species produced in biological systems such as proteins, RNA, DNA, a virus or a synthetically manipulated analog of these species not found in living systems, intended for use as a drug.

In the specification, the term "PEEK Printing" should be understood to mean additive manufacturing (or 3D printing) a polyether ether ketone (PEEK) polymer.

In the specification, the term "additive manufacturing" and "3D printing" should be understood to mean a printing process where a filament of a polymer is heated to above its melting temperature and extruded through a nozzle layer-by-layer to produce a part. Both terms can be used interchangeably.

In the specification, the term "Fused Filament Fabrication" (also called Fused Deposition Modelling) should be understood to be a form of additive manufacturing.

In the specification, the term "nozzle temperature" should be understood to mean the temperature of the nozzle that is selected to print a polymer when producing a part. Typically, the nozzle is set at a temperature of between 370°C and 410°C, that is, at 370 °C, 371 °C, 372 °C, 373 °C, 374 °C, 375 °C, 376 °C, 377 °C, 378 °C, 379 °C, 380 °C, 381 °C, 382 °C, 383 °C, 384 °C, 385 °C, 386 °C, 387 °C, 388 °C, 389 °C, 390 °C, 391 °C, 392 °C, 393 °C, 394 °C, 395 °C, 396 °C, 397 °C, 398 °C, 399 °C, 400 °C, 401 °C, 402 °C, 403 °C, 404 °C, 405 °C, 406 °C, 407 °C, 408 °C, 409 °C or 410 °C.

In the specification, the term "integrated mixer" should be understood to mean a configuration in the reaction chamber in which a turbulence promoter or a static mixer is integrated into the channel of the reactor. Turbulence promoters or laminar static mixers improve the mixing of chemicals and improve heat transfer. The integrated mixer has a thickness of about 0.7 mm, 0.71 mm, 0.72 mm, 0.73 mm, 0.74 mm, 0.75 mm, 0.76 mm, 0.77 mm, 0.78 mm, 0.79 mm, 0.8 mm, 0.81 mm, 0.82 mm, 0.83 mm, 0.84 mm, 0.85 mm, 0.86 mm, 0.87 mm, 0.88 mm, 0.89 mm, 0.9 mm, 0.91 mm, 0.92 mm, 0.93 mm, 0.94 mm, 0.95 mm, 0.96 mm, 0.97 mm, 0.98 mm, 0.99 mm 1.0 mm, 1.1 mm, 1.2 mm, 1.3 mm, 1.4 mm or 1.5 mm.

In the specification, the term "burst pressure" should be understood to mean, the pressure at which containment of pressurized process liquid fails, resulting in leaking of process liquid from the system with an associated drop in system pressure as a percentage of the flow can leave the system by leaking to the atmosphere rather than through an outlet which is connected to a backpressure regulator which sets system pressure above atmospheric pressure.

In the specification, the term "helical static mixer" should be understood to mean, a kenics type static mixer, which utilizes process-specific elements in a housing for continuous flow applications. The elements use the energy from the process stream to provide blending, dispersion, and heat transfer with low pressure (energy) loss. The static mixer provides mixing based on geometric folding of fluids under laminar conditions.

In the specification, the "internal diameter" should be understood to mean an internal diameter of a channel which acts as a conduit for the chemical, biochemical, biopharmaceutical or pharmaceutical ingredients being introduced into the reactor for mixing and being collected once the reaction in the reactor has completed. The internal diameter of the channel is selected from 1.0mm, 1.5 mm, 2 mm, 2,5 mm, 3 mm, 3.5 mm, 4 mm, 4.5 mm, 5 mm, 5,5 mm or 6 mm.

### Brief Description of the Drawings

The invention will be more clearly understood from the following description of an embodiment thereof, given by way of example only, with reference to the accompanying drawings, in which:-
**Figures 1(A)** and **(B)** illustrate an optical microscope images of PEEK samples printed with an extrusion temperature of (A) 375°C and (B) 400°C. The images show that increasing the temperature of the printed part causes a degradation of the material, with physical burn marks on the surface of the part.

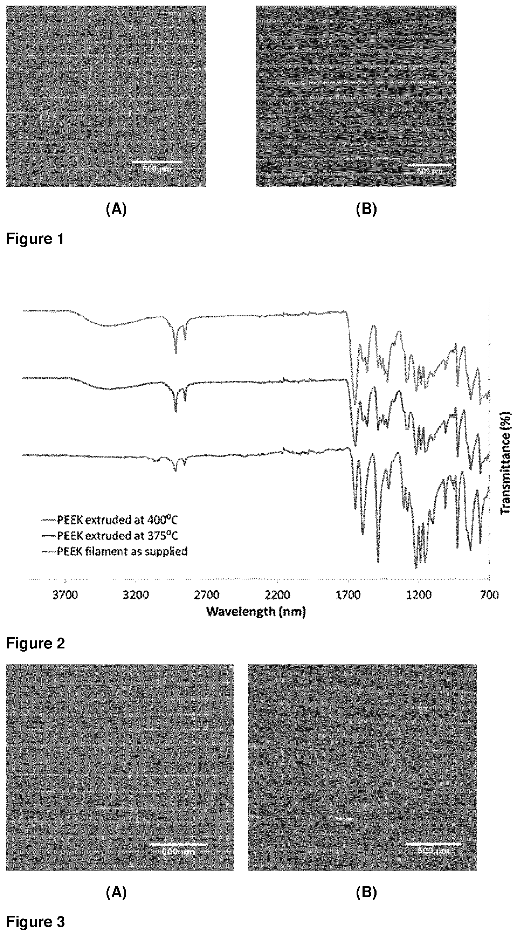

**Figure 2** is an Attenuated Total Reflectance-Fourier Transform Infrared Spectroscopy (ATR-FTIR) spectra of the PEEK filament extruded at 375°C and 400°C. The degradation of the material shown in Figure 1 was confirmed by ATR-FTIR. The ATR-FTIR spectroscopy shown in Figure 2 exhibits an increase in material crystallisation with increasing print temperature, as the peak intensity at ∼1280 cm⁻¹ reduces and ∼1305 cm⁻¹ increases. Evidence for some chemical degradation of the PEEK was also observed in the spectra before and after extrusion through reduction in the intensity of the peaks associated with the C-O and C-C functionality relative to that associated with the -OH group functionality (2800 and 3700 cm⁻¹).

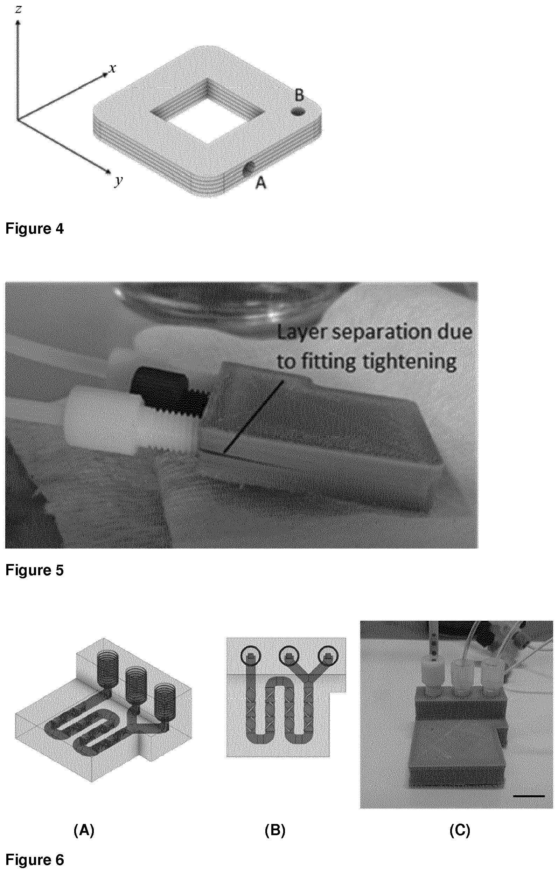

**Figure 3** shows an optical microscope images of PEEK samples printed with an extrusion speed of 10mm/s and 19mm/s at 375 °C. Parts were printed at 375°C and the extrusion speed was varied from 10 to 22 mm/s at 3 mm/s increments to examine the effects of printing speeds. Figure 5 shows an increase in surface roughness with increasing extrusion speed. This may be caused by the material not having sufficient time to melt before extrusion or the vibration of the motors as the extruder moves along the axis. Increasing the nozzle temperature may decrease this surface roughness, as the material viscosity will likely be reduced. However, as shown previously, increasing the temperature can have a negative effect on the material.
**Figure 4** illustrates an initial part design with an initial (A) and optimised (B) inlet and outlet orientation.
**Figure 5** illustrates split layers due to insertion of the fittings.
**Figure 6** shows the continuous flow reactor of one aspect of the claimed invention with inserted threaded fittings. (A) Orthographic view, (B) top view showing channel and mixer geometry, and (C) the printed part. Scale bar is 10 mm.
**Figure 7** illustrates a 4mm channel with 8 mixers in a continuous flow reactor part of one aspect of the claimed invention printed with a 0.4mm nozzle at 375°C.
**Figure 8** illustrates a 3mm channel with 12 mixers in a continuous flow reactor part of one aspect of the invention printed with a 0.4mm nozzle at 375°C.
**Figure 9** illustrates a 3mm channel with 12 mixers in a continuous flow reactor part of one aspect of the invention printed with a 0.25mm nozzle at 377°C.
**Figure 10** illustrates a 2mm channel with 16 mixers in a continuous flow reactor part of one aspect of the invention printed with a 0.15mm nozzle at 378°C.
**Figure 11** illustrates changing extraction efficiency with increasing flow rate/decreasing residence time.
**Figure 12** shows the reaction of 2,4-difluoronitrobenzene with morpholine.
**Figure 13** illustrates HPLC data showing the high extraction efficiency for the telescoped workup step.

### Detailed Description of the Drawings

### PEEK Printing

Initially, the printing PEEK was carried out using a 0.4mm print nozzle, using a Funmat HT printer (Intamsys, Shanghai, China) with 1.75mm PEEK filament (Intamsys, Shanghai, China). Layer height, buildplate temperature and chamber temperature were kept constant at 0.1 mm, 160°C and 70°C respectively.

To examine the effect of nozzle temperature PEEK parts where printed at increasing temperatures from 375°C to 400°C in 5°C increments. Initially the printing temperature was varied from 375°C to 400°C in increments of 5°C at 10mm/s. The printing speed selected was the lowest recommended speed by the filament manufacturer. A lower printing temperature was not used as the material had to be sufficiently melted to be extruded and a higher printing temperature was not selected as the material can degrade and cause the printer nozzle to block.

### FFF Printing PEEK Continuous Flow Reactors

As a reduced speed is necessary to reduce the surface roughness of parts, the reactors were printed with a shell speed of 10mm/s. As the infill is not visible, an increased speed of 12mm/s was chosen to reduce part production time. A low infill density of 10% was used as this will reduce part production time and costs but will still support the top layers and integrated channels. The parts as before were printed using the Funmat HT printer with the 1.75mm PEEK filament. Layer height, build plate temperature, and chamber temperature were kept constant at 0.09mm, 160°C, and 70°C, respectively.

The part was designed with two inlet streams and one outlet. The two inlets meet at a Y shaped interface before encountering the mixing elements. These integrated mixers are "twisted tape", fully joined to the tube wall, alternating in both the direction of their 180° turn, and their initial alignment with every mixer element. This arrangement has been shown to have excellent mixing efficiencies with low pressure drops. The inlet ports were printed with 1/4"-28 united fine thread (UNF) ports for connection with common flow chemistry fittings. Alternative designs include other static mixers, such as the SMX™ static mixers, which have similar or better performance under laminar conditions and can be used with the units of the claimed invention.

To reduce the ability to damage the processing unit when tightening the fittings, by splitting the 3D printed layers, a non-threaded cylinder is added below the threaded portion of the inlet and outlet ports. This non-threaded cylinder will have a diameter smaller than that of the threaded portion and will be used to place the Flangeless Ferrules. For the Flangeless Ferrules used here a diameter of 4.85 mm and a height of 1.5mm was used for the cylinder, as shown in Figure 1. This will reduce the ability to 'overtighten' the fittings, as the smaller cylinder diameter will stop the threaded fittings and, in turn, will reduce the ability to split the below layers with the compressive forces of placing the fittings.

An initial design had the inlets and outlet oriented in the Y axis (indicated as A in Figure 4). Holes printed in this axis are not typically circular. This caused the part to split when attaching the threaded fittings (see Figure 5).

The inlets and outlets were orientated to the Z axis (indicated as B in Figure 4) and the thread depth was increased to allow the threaded fittings to provide a more robust connection. Orientating the inlets and outlet to the Z-axis produced more accurate holes but also likely improved the strength as the threads were aligned with the layers, rather the perpendicular to them. Figure 6C shows the processing unit with inserted threaded fittings. There are no splits in the part with the threaded fittings fully attached.

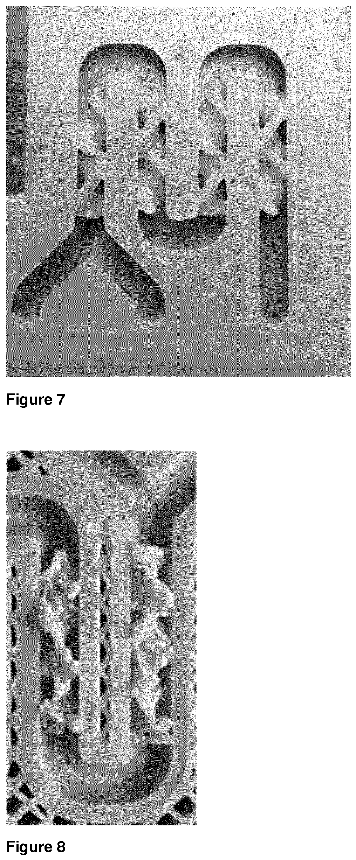

The initial design has a 4mm channel with eight integrated mixers. Figure 7 shows that printing this processing unit with a nozzle size of 0.4mm and a nozzle temperature of 375°C provided sufficient resolution of the integrated mixers.

Due to the success of printing the 4mm channel with 8 mixers, it was decided to reduce the internal channel diameter to 3mm and increase the number of mixers to 12, as this will likely improve the extraction efficiency of the processing unit. For this design, the size of the integrated mixers was reduced. This reduction in size had a negative effect on the resolution of the printed parts, as shown in Figure 8.

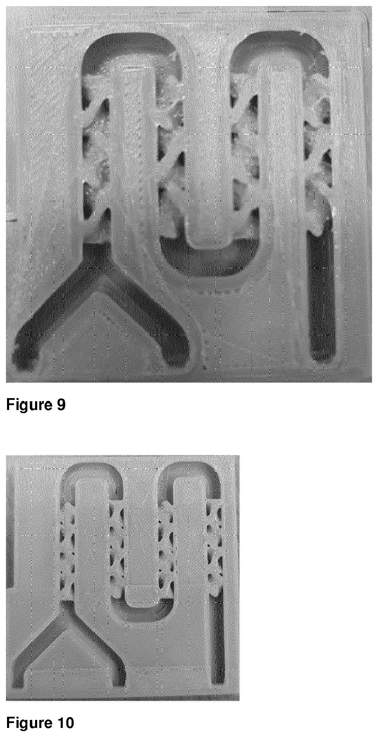

To improve the resolution, the nozzle size was reduced to 0.25mm. However, material would not extrude through this nozzle at 375°C as it was likely to be sufficiently viscous. The nozzle temperature was increased to 377°C and integrated mixers with significantly improved resolution were printed (see Figure 9). The print chamber is typically held at between 85 °C and 95°C in order to avoid rapid crystallisation of the polymer during cooling.

To further improve the extraction efficiency, the internal channel diameter was reduced to 2mm and 16 mixers where incorporated into the design. As with the 3mm channel, the 0.25mm nozzle could not provide sufficient resolution. The nozzle diameter was decreased further to 0.15mm and the nozzle temperature was required to be increased to 378°C. Figure 10 shows the printed internal structure. Decreasing the nozzle size results in a reduced rate of polymer printing, however it yields a higher printed part resolution.

### Chemical Reaction Study

The following two flow chemistry evaluations were carried out using a processing unit of the claimed invention printed using the 0.15 mm nozzle.

### Evaluation 1: Benzoic Acid extraction

A solution of benzoic acid in water was pumped, meeting an equal flow rate of ethyl acetate, and the subsequent partitioning of benzoic acid into the aqueous and organic phases were measured by UV spectrophotometry. The processing unit was designed with two inlet streams meeting at a Y shaped interface before encountering the mixing elements, before exiting (Figure 6). These were cleaned with the appropriate tapping tool to remove artefacts. The printing of threads is important to avoid the production of large quantities of swarf generated during thread cutting which can lead to blockages within the channels. The cutting of threads into FDM parts also places strain on the layers, potentially causing separation and damage.

The 3D printed parts were compared to a Y-mixer and a T-mixer without mixing elements to show the effect of inlet geometry and the volume of each setup was kept approximately the same at 0.75-1 mL and with 4 mm internal diameter tubing.

After this initial analysis two further iterations of the processing unit were printed, with smaller channel diameters of 3 mm and 2 mm to allow a larger number of mixing elements with the same pitch. These versions were tested at faster flow rates only to determine the effect of mixing element number on extraction efficiency at low residence times.

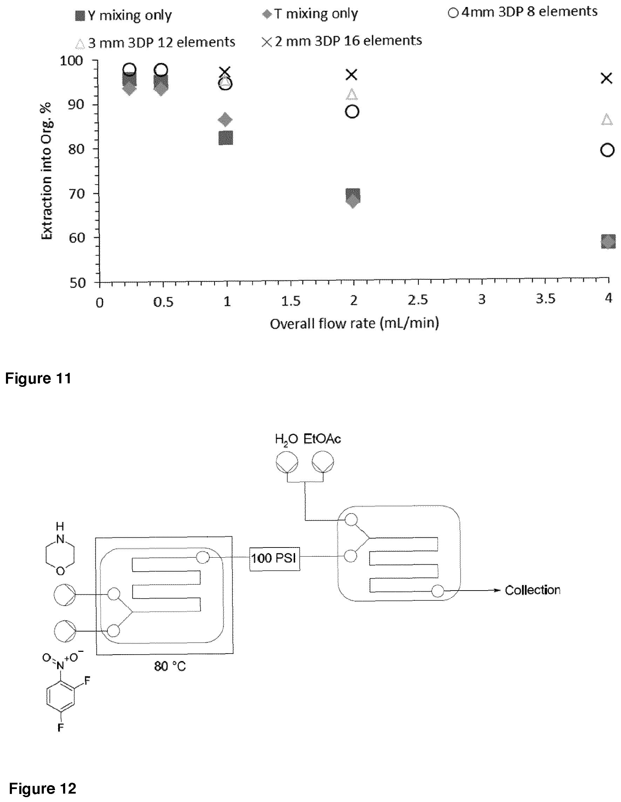

Comparison of extraction efficiencies for the different inlet profiles showed that the Y profile was slightly better than the T profile. This is presumably due to a larger contact area for the two fluids. At flow rates of 1 mL/min the printed mixers have extraction efficiencies of > 90% compared to 86% and 82% for the Y and T single stage mixing, respectively (Figure 11). The extraction efficiency for the single stage mixers dropped to 58 % by 4 mL/min whereas the printed mixers were still at least 80 %, with the 2 mm ID variant at nearly 95 %. A 30 second shake in a separatory funnel gave > 99 % efficiency.

### Evaluation 2: Reaction of 2,4-difluoronitrobenzene with morpholine

To demonstrate the suitability of the processing unit of the claimed invention for performing flow chemistry the SNAr reaction of 2,4-difluoronitrobenzene with morpholine was carried out as shown schematically below. Using methanol as the solvent and a reaction temperature of > 65 °C. A 100 psi back pressure regulator was installed after the reaction chip.

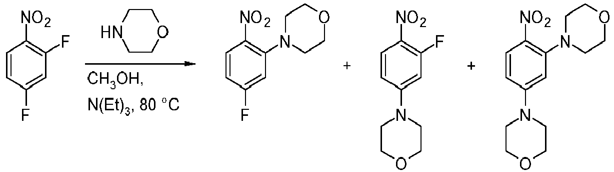

The reaction products were monitored using HPLC. Not all the anticipated reaction products were observed, with the ortho- and bis-species predominating. The processing unit output was met with a stream of equal parts ethyl acetate and water in a second printed mixer part to quench and workup the reaction before analysis of the resulting organic layer. The printed processing unit was heated by submersion in a water bath or a custom heating block that sits on a standard laboratory hotplate. The printed workup section was at room temperature.

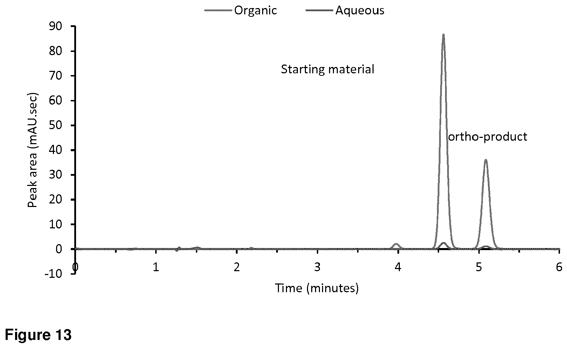

Performing the reaction at room temperature gave a small amount of the ortho-substituted product (2.4 % by peak area) which increased to 31.5 % upon heating to 80 °C. The measured internal temperature of the part, 5 mm from the surface, was 65 °C, the temperature 2 mm from the bottom of the part was 77 °C. This difference in values could be improved through a covering upper layer of aluminium or insulation on top of the piece. The extraction efficiency of the telescoped extraction was high, with 97% by peak area percentage of the product in the organic phase after the workup step (Figure 13).

### Burst pressure testing

This evaluation demonstrated that the printed processing unit could withstand a pressure of 500 psi for 20 minutes without any indication of leaking. To-date, although these parts have not been burst pressure tested to failure, yet the 500psi result is an excellent indication for the potential of these PEEK printed parts. This pressure rating would allow the superheating of acetonitrile to 200 °C while maintaining a good safety margin.

The 10% infill density used is the minimum infill required for these printed processing unit and increasing this will likely significantly improve the burst pressure. The burst pressure of the FFF PEEK printed processing unit here is the highest reported for FFF printed reactors. The burst pressure also exceeds some continuous flow reactors currently on the market, such as the Little Things Factory XXL microreactor which is stable up to 145 psi.

This study has demonstrated:
- Using an FFF print nozzle diameter of 0.15mm and nozzle temperature of 378°C allowed for a high level of printed PEEK processing unit finish to be achieved. In particular, a high level of resolution was achieved for the integrated twisted tape elements.
- The mechanical integrity of the printed processing unit has been demonstrated based on withstanding a pressure of 500 psi for 20 minutes without any indication of leaking. The closest value reported in the literature for a polymer reactor is 290 psi. Achieving the 500 psi with PEEK demonstrated the potential of the reactor for use with superheated solvents at high temperatures.
- The mixing efficiency of the reactor has been found to correlate with the printed mixing channel diameters. Comparing the 4-, 3- and 2-mm diameter channels for the extraction of benzoic acid into the aqueous and organic phases, the latter was demonstrated to achieve much higher mixing efficiencies.

The efficiency of the printed PEEK reactor was successfully demonstrated up to 80 °C, for the SNAr reaction of 2,4-difluoronitrobenzene with morpholine.

Several processing units can be set up in series or parallel, thus a successful design of one processing unit can be replicated across multiple processing unit, to be used to generate the final product, if necessary.

The invention is not limited to the embodiments hereinbefore described but may be varied in both construction and detail.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

## Claims

1. A printed processing unit for use in processing chemical, biochemical, pharmaceutical or biopharmaceutical materials, the unit comprising an inlet port for receiving the materials, a reaction chamber for processing the materials in fluid communication with the inlet port, a channel to transfer the materials from the inlet port to the reaction chamber, and an outlet port in fluid communication with the reaction chamber for removing the processed materials, wherein the reaction chamber is in an X- or Y-axis orientation and the inlet port and the outlet port are in a Z-axis orientation relative to the orientation of the reaction chamber.

2. The unit according to Claim 1, wherein the unit comprises at least two inlet ports that are in fluid communication with the channel.

3. The unit according to Claim 1 or Claim 2, wherein the reaction chamber further comprises an integrated mixer, and wherein the reaction chamber optionally comprises between 2 and 20 integrated mixers.

4. The unit according to Claim 3, wherein the integrated mixer has a thickness of between about 0.7 mm and about 1.5 mm.

5. The unit according to any one of Claims 3 or Claim 4, wherein the integrated mixer is selected from a helical static mixer, a kenics-type static mixer, and the like .

6. The unit according to any one of the preceding claims, wherein the channel has an internal diameter of between about 1.5 mm and about 5 mm.

7. The unit according to any one of the preceding claims, wherein the channel is configured to have at least one or more S-bends.

8. The unit according to any one of the preceding claims, wherein the unit is composed of a polymer selected from polyether ether ketone (PEEK), polyether ketone ketone (PEKK), fluorinated ethylene propylene (FEP), perfluoroalkoxy alkane (PFA), and the like.

9. The unit according to Claim 8, wherein the polymer is polyether ether ketone (PEEK).

10. The unit according to any one of Claims 8 or 9, wherein the polymer is further reinforced with a material selected from graphene, basalt fibre,

11. The unit according to any one of the preceding claims, wherein the inlet port and outlet port further comprise a threaded portion; and wherein the threaded portion of the inlet and outlet ports is optionally orthogonal to the layers of the reactor.

12. The unit according to any one of the preceding claims, wherein the unit is configured to connect to a plurality of identical, similar or differently configured units.

13. A method for printing a processing unit according to any one of the preceding claims, the method comprising:
a) providing a programmable 3D printer with a printing chamber, a build plate and a printer head configured to deliver a polymer to print the unit;
b) providing a print nozzle on the printer head that is heated to between about 375 °C and about 400 °C;
c) setting the printer to print the polymer at a set speed of between about 7mms⁻¹ and about 16mms⁻¹; and
d) maintaining the printing chamber and the build plate at a temperature of between about 50 °C and about 100 °C, and about 140 °C and about 180 °C, respectively.

14. The method of Claim 13, wherein the nozzle has a diameter of between about 0.10 mm and about 1.0 mm; and wherein the polymer is optionally printed in layers having a height of about 0.05 mm to about 0.15 mm.

15. The method of Claim 13 or Claim 14, wherein the printing chamber is maintained at a pressure of between atmospheric pressure (101 kPa) and 1 Pa.
